# EUROPÄISCHE PATENTSCHRIFT

(11) **EP 1 271 736 B1**
(45) Veröffentlichungstag und Bekanntmachung des Hinweises auf die Patenterteilung: **26.10.2005**
(21) Anmeldenummer: 02013835.0
(22) Anmeldetag: 21.06.2002
(51) Int. Cl.: H02G 3/38, H02G 3/04

(54) **Unterputz-Installationsschiene und Tragteil für ein Abdeckteil hierfür**
Flush mounted installation rail and holding element for a cover therefor
Rail d'installation encastré et élément porteur de couvercle pour celui ci

(30) Priorität: 21.06.2001 DE 20110280 U
(43) Veröffentlichungstag der Anmeldung: 02.01.2003
(73) Patentinhaber: Keller Lichtsysteme GmbH, 72461 Albstadt-Onstmettingen (DE)
(72) Erfinder: Keller, Fritz, 72461 Albstadt-Onstmettingen (DE)
(74) Vertreter: Hering, Hartmut

(56) Entgegenhaltungen:
- EP-A- 0 638 758
- DE-A- 2 725 768
- DE-A- 4 402 977
- DE-U- 7 701 100
- DE-U- 9 305 751
- FR-A- 2 794 297
- US-A- 5 406 762

## Beschreibung

Die Erfindung befaßt sich mit Installationsschienen, welche insbesondere für Elektroinstallationen im Deckenbereich bestimmt sind, sowie mit einem Tragteil für ein Abdeckteil von solchen Installationsschienen.

Bisher waren insbesondere für den Einbau von Elektroinstallationen nach Fertigstellung des Rohbaus umfangreiche vorbereitende Maßnahmen erforderlich, bei denen beispielsweise entsprechende Freiräume in den Wandflächen, und insbesondere den Deckenflächen, auf zeitraubende und umständliche Weise erstellt wurden, die dann für den Einbau der gewünschten Elektroinstallationen, wie Leuchten und dergleichen, genutzt wurden. Diese nachträgliche Erstellung von Freiräumen ist äußerst aufwendig und muß meist später noch wieder für einen sauberen Wandflächenabschluß nachbearbeitet, beispielsweise nachgeputzt werden. Natürlich gibt es auch die Möglichkeit, Elektroinstallationen, wie Leuchten oder dergleichen, auf der jeweiligen Deckenfläche zu montieren, so daß man einen in den Innenraum vorspringenden Aufbau für die entsprechenden Elektroinstallationen hat. Hierdurch wird das äußere Erscheinungsbild des Raums beeinträchtigt.

Aus DE 77 01 100 U ist ein Kabelkanal aus mehreren zusammenzusetzenden Abschnitten bekannt, wie dies beispielsweise in den einleitenden Teilen der Ansprüche 1 und 2 angegeben ist. Die freien Schenkel der zusammenzusetzenden Abschnitte weisen in Kabellängsrichtung verlaufende Rinnen zur Aufnahme von Klemmelementen an Kabelkanaldeckeln auf. Demgemäß soll ein Kabelkanal bereitgestellt werden, bei dem die Kabelkanalabschnitte an ihren Stoßstellen mit einfachen Mitteln miteinander verbindbar sind, die gleichzeitig zur Festlegung der Kabelkanaldeckel ohne großen Kraftaufwand an den Kanalabschnitten dienen. Für die Kabelkanäle sind die eigentlichen Tragprofile mit einem zumeist U-förmigen Querschnitt abschnittsweise aneinander gereiht. Diese Kabelkanäle und ihre Abschnitte werden auf entsprechenden Flächen, wie Wandflächen, Deckenflächen oder dergleichen, montiert, und dienen zur Verlegung von Elektroinstallationen. Diese Kabelkanäle ragen somit von der Wandfläche in den Innenraum vor, wodurch das äußere Erscheinungsbild des Raumes beeinträchtigt wird. Insbesondere sind hierbei die Klemmelemente der Kabelkanaldeckel als Steckelemente ausgebildet, die von Federelementen umgriffen und zusammen mit diesen in angrenzenden Kabelkanalabschnitte einklemmbar sind. Die Steckelemente werden von Federelementen derart umgriffen, daß ihre eine Hälfte in den einen Kabelkanalabschnitt und die andere Hälfte in den angrenzenden Kabelkanalabschnitt eingreift. Somit sind die Stoßstellen der Kabelkanalabschnitte durch die Federelemente stromleitend überbrückt.

Aus EP 0 638 758 A2 ist ein Blechprofilteil mit Sicken bekannt, welches gegebenenfalls zum Abhängen von Unterdecken oder dergleichen eingesetzt werden kann. Die Sicken dienen hierbei zur Versteifung der Seitenwände des Blechprofilteils. Gegebenenfalls können auch S-förmige Doppelsicken als Versteifungselemente für flache, dünnwandige Blechprofilteile vorgesehen sein. Bei diesen dort vorgesehenen Doppelsicken, welche zur Erzielung einer Versteifungswirkung dienen, ergibt sich bei verhältnismäßig geringer Sickenhöhe eine wesentlich größere Versteifungswirkung als bei im Abstand nebeneinander ausgeführte gleich große Sicken. Hierdurch erhält man eine erhöhte Versteifungswirkung.

Die Erfindung zielt darauf ab, Installationsschienen bereitzustellen, welche bereits im Zuge des Baufortschritts und bei der Erstellung des Rohbaus beispielsweise als im Bauwerk verbleibendes Element eingesetzt werden können, so daß man eine Unterputz-Installationsschiene erhält. Ferner soll ein Tragteil oder ein Abdeckteil von solchen Unterputz-Installationsschienen bereit gestellt werden, welches mit nur einfachen Werkzeugen das Abdeckteil zuverlässig und leicht lösbar an der Installationsschiene hält.

Nach der Erfindung wird hierzu einerseits eine Installationsschiene nach Anspruch 1 und andererseits eine Installationsschiene nach Anspruch 2 bereitgestellt.

Die erfindungsgemäßen Installationsschienen, welche ein Hohlprofilteil umfassen, dessen Seitenschenkel im Querschnitt eine Σ-Profilform aufweisen, werden flächenbündig in eine Wandfläche eingelassen, und sind insbesondere als ein im Bauwerk verbleibendes Element eingegossen. Somit wird bei den erfindungsgemäßen Installationsschienen bereits bei der Erstellung des Bauwerks ein entsprechender Einbauraum frei gehalten, welcher insbesondere für Elektroinstallationen bestimmt ist. In diesem vom Hohlprofilteil der Installationsschienen umschlossen Bereich können dann die gewünschten Elektroinstallationen, wie Leuchten und dergleichen, installiert und verlegt werden. Insbesondere gestattet die erfindungsgemäße Auslegung der Installationsschienen ein Einlassen derselben in die zugeordnete Wandfläche, so daß man keine in den Raum vorstehenden Teile hat. Unabhängig davon, ob die Installationsschienen später dann beispielsweise mit Elektroinstallationen belegt werden oder nicht, verleihen die Installationsschienen mit dem Abdeckteil den jeweiligen Wand- bzw. Deckenflächen ein optisch ansprechendes Äußeres, und insbesondere kann die gesamte Raumhöhe ausgenutzt werden, da im wesentlichen keine in den Raum vorstehende Einbauten für Beleuchtungsmittel oder dergleichen vorhanden sind. Durch das Vorsehen des jeweiligen Abdeckteils, welches lösbar mit den Installationsschienen verbunden ist, läßt sich dieses Abdeckteil bei der Durchführung der Innenausbauarbeiten leicht abnehmen, um dann die gewünschten Installationsarbeiten und Installationsverlegungen vorzunehmen. Auch dient das Abdeckteil als Schutz vor einer eventuellen Verschmutzung des von der Installationsschiene gebildeten Innenraums oder Aufnahmeraums. Auch lassen sich dank des Abdeckteils gegebenenfalls noch später und nachträglich Elektroinstallationen in dem Aufnahmeraum des Hohlprofilteils montiert werden können. Das Abdeckteil läßt sich mit Hilfe eines einfachen Werkzeugs von dem Hohlprofilteil der Installationsschiene abnehmen.

Ferner dient das Abdeckteil als eine Verblendung für die mit dem Bauwerk fest verankerte Installationsschiene, so daß man einen ansprechenden Wandflächenabschluß erhält.

Vorzugsweise hat das Hohlprofilteil eine Bauhöhe bis zu 25 mm, so daß Dank dieser niedrigen Bauhöhe das Hohlprofilteil als im Bauwerk verbleibendes Element ohne nennenswerte Schwächung des tragenden effektiven Wandquerschnitts und insbesondere des Deckenquerschnitts flächenbündig eingelassen werden kann.

Weitere vorteilhafte Ausgestaltungsformen der Installationsschiene sind in den Ansprüchen 5 bis 7 wiedergegeben.

Ferner wird nach der Erfindung ein Tragteil für ein Abdeckteil an einer Installationsschiene der vorstehend genannten Art bereitgestellt, dessen Merkmale in Anspruch 8 wiedergegeben sind. Dieses Tragteil für ein Abdeckteil ist insbesondere derart ausgelegt, daß das Tragteil mittels einer vereinfachten und mittels eines einfachen Werkzeugs lösbaren Verbindung eine Montage des Abdeckteils an der Installationsschiene gestattet. Insbesondere weist das Tragteil eine in Form eines selbsthemmend im Einbauzustand das Abdeckteil für die Installationsschiene tragendes Federelement auf. Dieses Federelement gestattet, daß das von der unterputzverlegten Installationsschiene gebildete Einbauraum mittels des Abdeckteils gegebenenfalls unter Berücksichtigung eines automatischen Putzüberstandausgleichs derart abschließen kann, daß das Federelement einerseits das Abdeckteil zuverlässig trägt, und andererseits eine mittels eines einfachen Werkzeugs lösbare kraftschlüssige Verbindung mit wenigstens einem Teil der Installationsschiene bildet. Hierdurch wird erreicht, daß das Abdeckteil zuverlässig auf montagefreundliche Weise mittels des Federelements des Tragteils gehalten ist, und daß auch das Abdeckteil im Bedarfsfall mit nur einem einfachen Werkzeug und auf leichte und bequeme Weise von der Installationsschiene abgenommen werden kann. Zum Ablösen des Abdeckteils reicht es aus, die kraftschlüssige Verbindung von dem Federelement mit der Installationsschiene aufzuheben. Mittels des Tragteils in Form eines selbsthemmenden Federelements lassen sich somit das Anbringen und das Lösen des Abdeckteils auf montagefreundliche Weise durchführen.

Um eine möglichst gleich verteilte Krafteinwirkung zu bekommen, ist das Federelement vorzugsweise symmetrisch zur Längsachse der Installationsschiene ausgebildet.

Durch das bei dem Tragteil vorhandene kraftschlüssig Zusammenarbeiten der Enden des Federelements mit dem Profilteil der Installationsschiene wird reicht, daß man dann, wenn das Abdeckteil abgenommen werden soll, das Abdeckteil unter Einsatz eines einfachen Werkzeugs in Richtung von der Installationsschiene weg unter Krafteinwirkung ablöst, ohne daß man irgendwelche Schraubverbindungen zu lösen braucht. Hierdurch werden die Montage und die Demontage des Abdeckteils mit Hilfe des erfindungsgemäßen Tragteils aufgrund des dort ausgebildeten Federelements wesentlich vereinfacht.

Bei der Ausgestaltung der Installationsschiene nach Anspruch 5 und des Tragteils nach Anspruch 10 ermöglicht der Mittelabschnitt des Federelements eine zuverlässige Anlage und Halterung des Abdeckteils in seinem Mittelbereich an dem Federelement, um den auskragenden C-förmigen Endabschnitten zu gestatten, daß das Federelement weitgehend unbeeinflußt durch die Halterung von Federelement und Abdeckteil selbsthemmend mit der Installationsschiene zusammen arbeiten kann. Funktionell ist daher mit dem Federelement die fedemde Halterung des Abdeckteils weitgehend von der kraftschlüssigen Anlage von der Installationsschiene getrennt, so daß sich die entsprechenden Abschnitte des Federelements des Tragteils auf die jeweils notwendigen Erfordernisse an den jeweiligen Halterungsbereichen weitgehend unabhängig voneinander abstimmen lassen.

Um die gezielte funktionelle Trennung zu verstärken, wird eine Auslegung einer Installationsschiene und eines Tragteils nach den Ansprüchen 6 und 11 bereitgestellt. Die Materialaussparungen dienen einerseits zur Einstellung der Federwirkung für die kraftschlüssige Verbindung und zur Einstellung der Anpreßkraft der mit der Installationsschiene kraftschlüssig zusammen arbeitenden Enden des Federelements. Diese Materialaussparungen dienen einerseits zur funktionellen Trennung, um federnde Wechselwirkungen zu vermeiden, und andererseits lässt sich mit Hilfe dieser Materialaussparungen auch das Biegeverhalten des Federelements gezielt an den entsprechenden funktionswesentlichen Teile in abgestimmter Weise einstellen. Durch die entsprechende Wahl der Materialaussparungen können insbesondere die Anpreßkräfte im Bereich der reibschlüssigen Verbindung an den Enden des Federelements im Zusammenwirken mit der Installationsschiene in vorbestimmter Weise eingestellt werden.

Vorzugsweise ist das Federelement zur fertigungstechnischen Vereinfachung materialeinheitlich ausgebildet. Insbesondere wird das Federelement durch Biegen und Stanzen aus einem Blechmaterial hergestellt.

Die Erfindung wird nachstehend an Hand von bevorzugten Ausführungsformen unter Bezugnahme auf die beigefügte Zeichnung ohne jegliche Beschränkung als Beispiel erläutert.

In der Zeichnung zeigt:
- Fig. 1: eine perspektivische Gesamtansicht einer Installationsschiene als selbständiges Einbauteil,
- Fig. 2: eine schematische Querschnittsansicht eines Einbaubeispiels einer Installationsschiene, beispielsweise im Deckenbereich eines Raumes,
- Fig. 3: eine perspektivisch auseinander gezogene Ansicht von Installationsschiene, Abdeckteil und Tragteil in Form eines Federelements,
- Fig. 4: eine schematische Querschnittsansicht in unverbundener und auseinander gezogener Darstellung von Installationsschiene, Abdeckteil und Tragteil in Einzelteildarstellung, aber unter wechselweiser Zuordnung in funktioneller Hinsicht, und
- Fig. 5: eine schematische Querschnittsansicht einer Zusammenbauanordnung von einer Installationsschiene mit daran lösbar angebrachtem Abdeckteil im Zusammenwirken mit einem Tragteil, welches ein Federelement aufweist.

In den Figuren der Zeichnung sind gleiche oder ähnliche Teile mit denselben Bezugszeichen versehen.

In den Figuren der Zeichnung ist ein Beispiel einer Unterputz-Installationsschiene insgesamt mit 1 bezeichnet. Diese Unterputz-Installationsschiene 1 umfaßt ein Hohlprofilteil 2, welches im Querschnitt eine Z-Profilform hat. Dieses Hohlprofilteil 2 umschließt einen Innenraum 3, welcher beispielsweise als Aufnahmeraum für Elektroinstallationen, wie Leuchten und dergleichen (nicht dargestellt) dienen kann. Dieses Hohlprofilteil 2 hat eine im Querschnitt Z-förmige ausgebildete Profilform und eine niedrige Bauhöhe von vorzugsweise bis zu etwa 25 mm.

An dieser Unterputz-Installationsschiene 1 läßt sich ein Abdeckteil 4 anbringen, welches beim dargestellten Beispiel plattenförmig ausgebildet ist und mit einer fußartigen Erhebung auf den beiden gegenüberliegenden zur Wandfläche parallelen Abschnitten 5 des Hohlprofilteils 2 abgestützt ist.

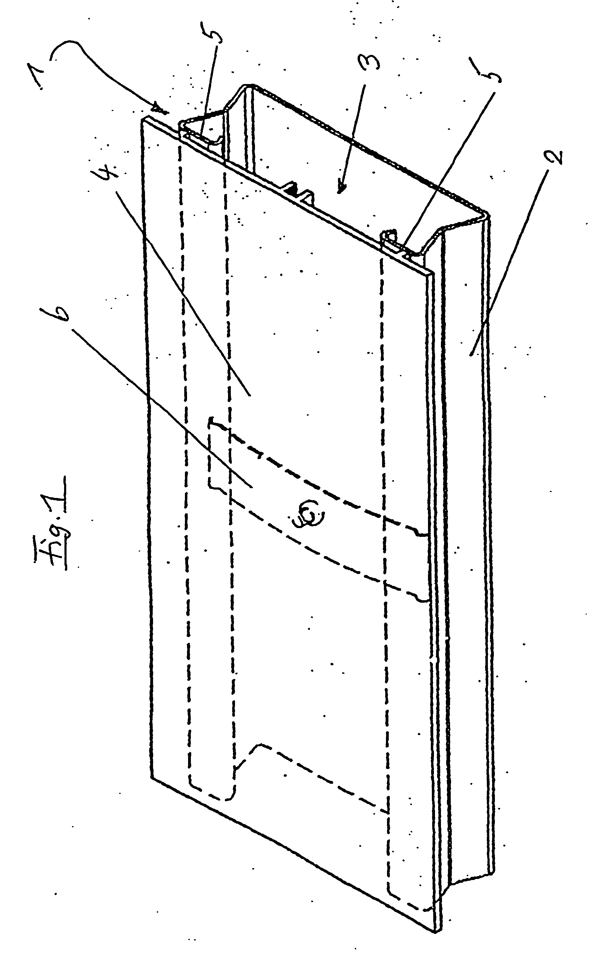

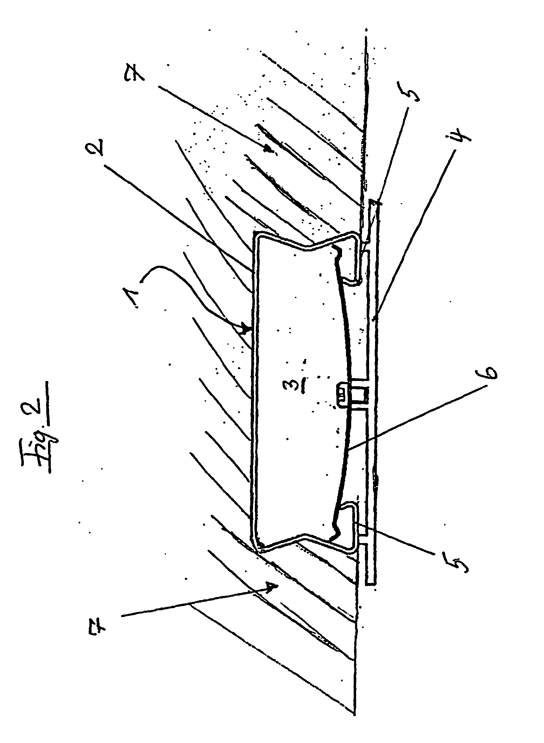

Wie aus den Figuren 1 und 2 zu ersehen ist, ist dieses Abdeckteil 4 mittels wenigstens eines Tragteils 6 von dem Hohlprofilteil 2 gehalten. In Abhängigkeit von der Längserstreckung der Unterputz-Installationsschiene 1 und/oder der Längserstreckung des Hohlprofilteils 2 können gegebenenfalls mehrere Tragteile 6 in Längsrichtung beabstandet angeordnet sein. Jedes Tragteil 6 hintergreift die zur Wandfläche parallelen Abschnitte 5 des Hohlprofilteils 2 und ist an diesen stabil abgestützt. Mit Hilfe einer schematisch dargestellten lösbaren Verbindung ist dann das jeweilige Abdeckteil 4 an dem zugeordneten Tragteil 6 oder den zugeordneten Tragteilen 6 befestigt.

Das Hohlprofilteil 2 bildet ein im Bauwerk verbleibendes und dort eingelassenes Element, welches bei den Rohbauarbeiten bei der Bauwerkserstellung an den entsprechenden Stellen in den Wänden, insbesondere in den Deckenwänden, eingelegt wird.

In Verbindung mit Figur 2 ist die Unterputz-Installationsschiene 1 nach der Erfindung im in der Wandfläche 7 eingelassenen Zustand verdeutlicht. Hierbei wurde lediglich als Beispiel eine Deckenfläche 7 eines Gebäudes gewählt. Natürlich kommen in gleicher oder ähnlicher Weise auch andere Gebäudewandflächen in Betracht. Wie aus Figur 2 zu ersehen ist, ist das Hohlprofilteil 2 der Unterputz-Installationsschiene 1 vollständig versenkt in die Deckenfläche 7 eingelassen, so daß die zur Wandfläche parallelen Abschnitte 5 des Hohlprofilteils 2 im wesentlichen oberflächenbündig mit der Deckenfläche 7 abschließen. Das Abdeckteil 4 steht dann geringfügig über die Wandfläche 7, wie die Deckenfläche 7, über. Durch das lösbar am Hohlprofilteil 2 gehaltene Abdeckteil 4 kann dann der von dem Hohlprofilteil 2 umschlossene Innenraum 3 abgedeckt und wirksam vor Verschmutzungen geschützt werden.

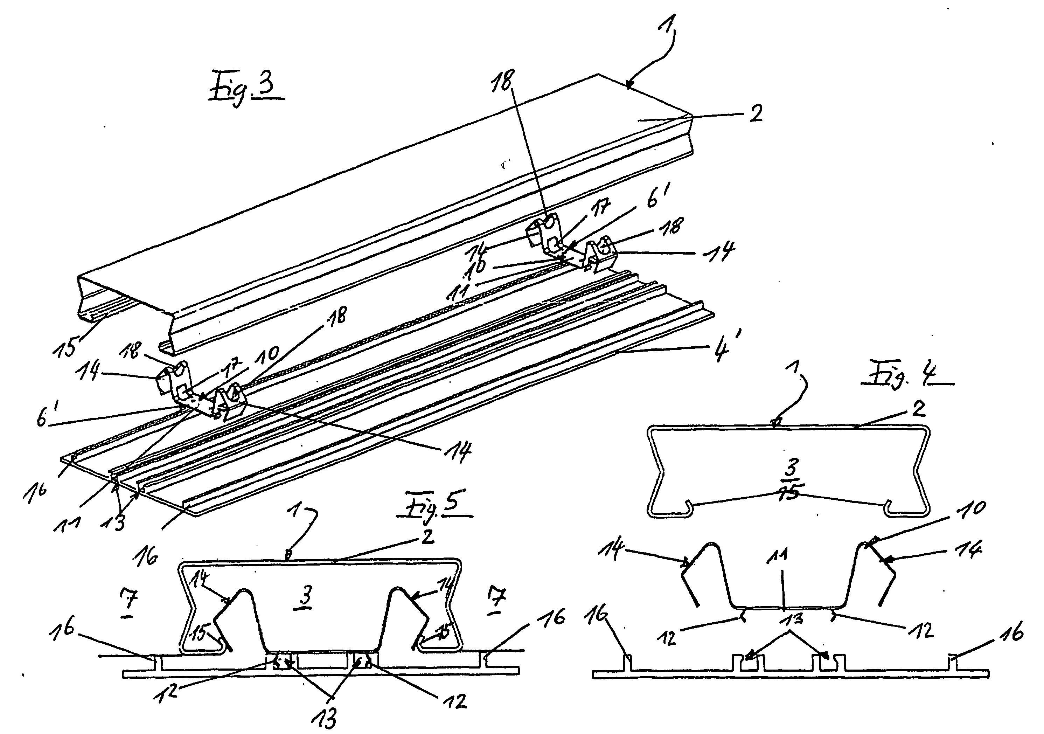

An Hand den Figuren 3 bis 5 wird eine bevorzugte Ausgestaltungsform eines Tragteils 6' in Form eines Federelements erläutert, mittels welchem ein Abdeckteil 4' an einer Unterputz-Installationsschiene 1 kraftschlüssig lösbar angebracht werden kann. Wie insbesondere aus Figur 3 zu ersehen ist, ist das Tragteil 6' vorzugsweise als materialeinheitliches Federelement 10 ausgebildet. Dieses Federelement 10 hat einen mittleren Abschnitt 11, welcher im wesentlichen U-förmig ausgebildet ist. An diesem mittleren Abschnitt 11 sind Federarme 12 ausgebildet, welche an dem Federelement 10, wie dies inbesondere aus Figur 4 zu ersehen ist, in Richtung zu dem Abdeckteil 4' vorstehen. Wie insbesondere ebenfalls aus Figur 4 zu ersehen ist, hat das Abdeckteil 4' an seinem Mittelbereich eine vorbestimmte Profilierung 13, welche derart gestaltet ist, daß das Federelement 10 mit den Federarmen 12 federnd in die von der Profilierung 13 gebildeten Aussparungen einrasten kann, wobei wenigstens teilweise die Federarme 12 umgriffen werden, so daß die Anordnung aus Abdeckteil 4' und Federelement 10 eine vormontierbare Einheit bildet, und das Abdeckteil 4' zuverlässig mittels des Rasteingriffs und in Verbindung mit einer zusätzlichen, formschlüssigen Verbindung am Federelement 10 gehaltert ist. Der mittlere Abschnitt 11 des Federelements 10 liegt hierbei zur Ausrichtung und Zentrierung zu dem Federelement 10 oberflächenbündig an den freien Enden der vorspringenden Profilierung 13 des Abdeckteils 4' an. Hierdurch wird das Abdeckteil 4' ausgerichtet und mittig an dem Federelement 10 gehalten, wenn die Federarme 12 in die Profilierung 13 des Abdeckteils 4' eingerastet sind.

Wie ferner insbesondere aus den Figuren 3 und 4 zu ersehen ist, umfaßt das Federelement 10 beidseitig des mittleren Abschnitts 11 wenigstens ein frei auskragendes Ende 14, welches vorzugsweise C-förmig ausgestaltet ist, und dazu dient, daß es entsprechend der Darstellung nach Figur 5 mit einem innenliegenden Profilabschnitt der Unterputz-lstallationsschiene 1 kraftschlüssig und selbsthemmend zusammenarbeitet. Wie insbesondere aus Figur 5 zu ersehen ist, liegen die Endabschnitte 14 flächig unter Bildung einer Kraft- und Reibschlußverbindung an dem innenliegenden Profilabschnitt 15 an, wenn das Abdeckteil 4' mittels des Federelements 10 an der Unterputz-Installationsschiene 1 angebracht ist, um den Innenraum 3 der Unterputz-Installationsschiene 1 zuverlässig abzudecken. Vorzugsweise hat das Abdeckteil 4' außerhalb des Erstreckungsbereichs der Unterputz-Installationsschiene 1 Profilvorsprünge 16, welche - wie in Figur 5 schematisch angedeutet - einen selbsttätigen Putzabgleich mit der Wandfläche bzw. der Deckenfläche 7 gestatten, und mit ihren freien Enden an dem Putz der Wandfläche bzw. Deckenfläche 7 zur Berührungsanlage kommen. Aufgrund des Federungsvermögens der Federarme 12 kann somit durch diese Profilvorsprünge 16 an dem Abdeckteil 4' selbsttätig ein Putzausgleich bereitgestellt werden.

Wie insbesondere aus Figur 3 zu ersehen ist, ist an dem Übergangsbereich des Federelements 10 und dem mittleren Abschnitt 11 für den jeweiligen auskragenden Endabschnitt 14 wenigstens jeweils eine Materialaussparung zur Einstellung der Federwirkung vorgesehen. Zugleich gestattet diese Materialaussparung 17 eine weitgehend funktionelle Trennung des mit der Unterputz-Installationsschiene 1 zusammenarbeitenden Federendes 14 von dem mit dem Abdeckteil 4' zusammenarbeitenden mittleren Abschnitt 11 des Federelements 10 und den Federarmen 12. Zusätzlich oder auch alternativ ist an dem Biegebereich des jeweiligen C-förmigen, auskragenden Endabschnitts 14 des Federelements 10 wenigstens eine weitere Materialaussparung 18 vorgesehen, welche insbesondere zur Einstellung der Anpreßkraft der mit der Installationsschiene 1 kraftschlüssig zusammenarbeitenden Enden 14 des Federelements 10 vorgesehen ist. Durch die entsprechend Wahl der Größe und/oder Lage der Materialaussparungen 17, 18 lassen sich einerseits die Federkräfte und das Federungsvermögen bzw. das Federverhalten des Federelements 10 auf die jeweils gewünschten Bereiche abstellen, d.h. auf den Zusammenwirkungsbereich am Abdeckteil 4' und/oder am Zusammenwirkungsbereich der Enden 14 des Federelements 10 mit der Unterputz-Installationsschiene 1. Zugleich wird durch die durch die Materialaussparungen 17, 18 bewirkte Materialunterbrechung des Federelements 10 auf einfache und konstruktive Weise erreicht, daß sich wechselseitige Beeinflussungen der wirksamen Bereiche des Federelements 10 weitgehend ausschalten lassen.

Wie insbesondere aus Figur 5 zu ersehen ist, wird die Baueinheit aus dem Abdeckteil 4' und dem Federelement 10 lediglich in Richtung des Innenraums 3 des Hohlprofilteils 2 der Unterputz-Installationsschiene 1 unter entsprechender Kraftbeaufschlagung und Einsatz eines einfachen Werkzeugs in das Abdeckteil 4' eingedrückt, bis die Profilvorsprünge 16 an dem Abdeckteil 4' zur Anlage an dem die Installationsschiene umgebenden Putz kommen. Hierbei werden die Federenden 14 des Federelements 10 in Anlage- und Anpreßberührung mit dem innenliegenden Profilabschnitt 15 der Unterputz-Installationsschiene 1 gebracht, und das Abdeckteil 4' ist im Einbauzustand zuverlässig selbsthemmend und kraftschlüssig an der Unterputz-Installationsschiene 1 gehalten. Hierdurch erhält man einen oberflächenbündigen Abschluß der Unterputz-Installationsschiene 1, wenn der Innenraum 3 derselben nicht zum Einbau von Elektroinstallation beispielweise genutzt zu werden braucht. Wenn dann später beispielsweise Bedarf besteht, in dem Innenraum 3 der Unterputz-Installationsschiene 1 Elektroninstallationen oder dergleichen zu verlegen, so braucht das Abdeckteil 4' im Verbund mit dem Federelement 10 als Tragteil nur unter entsprechender Krafteinwirkung mittels eines einfachen Werkzeugs von der Unterputz-Installationsschiene 1 abgelöst zu werden. Hierbei wird die selbsthemmende Kraft- und Reibschlußverbindung an den Enden 14 des Federelements 10 überwunden und aufgehoben, und das Abdeckteil 4' läßt sich dann von der Unterputz-Installationsschiene 1 abnehmen, und die Elektroinstallationen können dann beispielsweise in dem freigelegten Innenraum 3 der Unterputz-Installationsschiene 1 bedarfsabhängig verlegt werden.

Natürlich lassen sich auf die erfindungsgemäße Weise auch Unterputz-Installationsschienen 1 wieder mit einem Abdeckteil 4' abdecken, wenn die in dem Innenraum 3 der Unterputz-Installationsschiene 1 verlegten Elektroninstallationen beispielsweise nicht mehr gebraucht werden. Hierdurch erhält man dann einen gefälligen Wandabschluß durch das nur durch Aufdrücken wiederum angebrachte Abdeckteil 4'.

Wenn nun im Zuge der Innenausbauarbeiten eines Bauwerks Elektroinstallationen insbesondere im Deckenbereich eines Gebäudes vorzusehen sind, so können das oder die Abdeckteile 4, 4' und die zugeordneten Tragteile 6, 6' bzw. 10 mittels einfachen Werkzeugs entfernt werden. Nunmehr kann der von dem Hohlprofilteil 2 umschlossene Innenraum 3 vollständig für die Montage der gewünschten Elektroinstallationen, wie Leuchten oder dergleichen, genutzt werden. Auf diese Weise sind zur Verlegung von Elektroinstallationen keine zusätzlichen zeitraubenden und arbeitsaufwendigen Arbeiten, wie Bohrarbeiten und dergleichen, zu verrichten, sondern die Unterputz-Installationsschiene 1 nach der Erfindung stellt einen hierfür geeigneten Einbauraum 3 zur Verfügung. Falls irgendwelche Längsabschnitte im Deckenbereich oder an anderen Wandflächen nicht für Installationsarbeiten, insbesondere für Elektroinstallationsarbeiten, genutzt zu werden brauchen, so ist das Hohlprofilteil 2 zuverlässig abgeschlossen durch das Abdeckteil 4, 4' im verlegten Zustand der Unterputz-Installationsschiene 1 vorhanden. Wenn dann nachträglich noch Elektroinstallationen beispielsweise zu verlegen sind, so können diese ohne Schwierigkeiten verwirklicht werden, da dann nur das oder die zugeordneten Abdeckteile 4, 4' von dem Hohlprofilteil 2 abgenommen zu werden brauchen.

Natürlich ist die Erfindung nicht auf die in der Zeichnung dargestellten und zuvor beschriebenen Einzelheiten beschränkt, sondern es sind zahlreiche Abänderungen und Modifikationen möglich, die der Fachmann im Bedarfsfall treffen wird, ohne den Erfindungsgedanken, der in den Ansprüchen definiert wird, zu verlassen. Vielmehr ist es nach der Erfindung wesentlich, daß man mit Hilfe einer Unterputz-Installationsschiene 1 bereits bei der Bauwerkserstellung im Rohbau entsprechende Einbauräume 3 für Elektroinstallationen vorbereitet und bereitstellt, und dann im Zuge der Innenausbauarbeiten des Bauwerks zu dem jeweils bestimmungsgemäßen Zweck genutzt werden können. Hierdurch vereinfacht sich die Verlegung und die Verwirklichung von Installationen wesentlich und insbesondere sind keine von der Wandfläche 7 vorstehende und die vollständige Nutzung des Raumes behindernde zusätzliche Aufbauten vorhanden. Hiermit wird auch das optische Erscheinungsbild des Raumes nennenswert verbessert.

## Patentansprüche

1. Installationsschiene (1), insbesondere für Elektroinstallationen im Deckenbereich welche ein Hohlprofilteil (2) aufweist, das einen Innenraum (3) als Aufnahmeraum für Elektroinstallationen, wie Leuchten oder dergleichen, umschließt und zu einer Wandfläche (7) parallele Abschnitte hat, und der vom Hohlprofilteil (2) gebildete Aufnahmeraum (3) mittels eines lösbar angebrachten Abdeckteils (4) abgeschlossen ist, **dadurch gekennzeichnet, daß** die Seitenschenkel des Hohlprofilteils (2) im Querschnitt eine Σ-Profilform aufweisen, daß das Hohlprofilteil (2) zum Unterputzeinbau flächenbündig in die Wandfläche (7) als im Bauwerk verbleibendes Element eingelassen werden kann, daß das Abdeckteil (4) mittels wenigstens eines, wenigstens teilweise in dem Innenraum (3) des Hohlprofilteils (2) angeordnete Tragteils (6) derart gehalten ist, daß das Abdeckteil (4) auf dem zur Wandfläche (7) parallelen Abschnitten (5) des Hohlprofilteils (2) aufliegt, und daß das Tragteil (6) die parallel zur Wandfläche (7) verlaufenden Abschnitte (5) des Hohlprofilteils (2) hintergreift.

2. Installationsschiene (1), insbesondere für Elektroinstallationen im Deckenbereich welche ein Hohlprofilteil (2) aufweist, das einen Innenraum (3) als Aufnahmeraum für Elektroinstallationen, wie Leuchten oder dergleichen, umschließt und zu einer Wandfläche (7) parallele Abschnitte hat, und der vom Hohlprofilteil (2) gebildete Aufnahmeraum (3) mittels eines lösbar angebrachten Abdeckteils (4') abgeschlossen ist, **dadurch gekennzeichnet, daß** die Seitenschenkel des Hohlprofilteils (2) im Querschnitt eine Σ-Profilform aufweisen, daß das Hohlprofilteil (2) zum Unterputzeinbau flächenbündig in die Wandfläche (7) als im Bauwerk verbleibendes Element eingelassen werden kann, daß das Abdeckteil (4') mittels wenigstens eines, wenigstens teilweise in dem Innenraum (3) des Hohlprofilteils (2) angeordneten Tragteils (6') derart gehalten ist, daß das Tragteil (6') in Form eines selbsthemmend im Einbauzustand das Abdeckteil (4') der Installationsschiene (1) tragenden Federelements (10) ausgebildet ist, daß das Federelement (10) Federarme (12) umfaßt, die in Richtung zu dem Abdeckteil (4') vorstehen und in eine Profilierung (13) des Abdeckteils (4') federnd einrasten, und daß den Seitenschenkel des Hohlprofilteils (2) zugewandte Endabschnitte (14) des Federelements (10) flächig unter Bildung einer Kraft- und Reibschlußverbindung an Profilabschnitten (15) des Hohlprofilteils (2), welche sich von den innenliegenden Enden der zur Wandfläche parallelen Abschnitte in den Innenraum (3) erstrecken, anliegen, so daß das Abdeckteil (4') hierdurch lösbar an der Installationsschiene (1) gehaltert ist.

3. Installationsschiene nach Anspruch 1 oder 2, **dadurch gekennzeichnet, daß** das Hohlprofilteil (2) eine Bauhöhe von bis zu etwa 25 mm hat.

4. Installationsschiene nach Anspruch 2, **dadurch gekennzeichnet, daß** das Federelement (10) symmetrisch zur Längsachse der Installationsschiene (1) ausgebildet ist.

5. Installationsschiene nach einem der Ansprüche 2 bis 4, **dadurch gekennzeichnet, daß** das Federelement (10) einen mittleren Abschnitt (11) mit einer im wesentlichen U-Profilform hat, welche im Einbauzustand zur Anlage an dem Abdeckteil (4') kommt und beidseitig des mittleren Abschnitts (11) je einen der Endabschnitte (14) hat, welcher C-förmig auskragend ausgebildet ist und im Einbauzustand selbsthemmend mit der Installationsschiene (1) zusammenarbeitet.

6. Installationsschiene nach Anspruch 5, **dadurch gekennzeichnet, daß** an dem Übergangsbereich des Federelements (10) von dem mittleren Abschnitt (11) zu dem jeweiligen auskragenden Endabschnitt (14) wenigstens jeweils eine Materialsaussparung (17) zur Einstellung der Federwirkung und/oder an dem Biegebereich des jeweiligen C-förmigen, auskragenden Endabschnitts (14) wenigstens jeweils eine weitere Materialaussparung (18) zur Einstellung der Anpreßkraft der mit der Installationsschiene (1) kraftschlüssig zusammenarbeitenden Enden (14) des Federelements (10) vorgesehen sind.

7. Installationsschiene nach einem der Ansprüche 2 bis 6, **dadurch gekennzeichnet, daß** das Federelement (10) materialeinheitlich ausgebildet ist.

8. Tragteil für ein Abdeckteil (4') einer Installationsschiene (1) nach Anspruch 2, **dadurch gekennzeichnet, daß** es in Form eines selbsthemmend im Einbauzustand das Abdeckteil (4') der Installationsschiene (1) tragendes Federelement (10) ausgebildet ist, daß das Federelement (10) Federarme (12) umfaßt, die in Richtung zu dem Abdeckteil (4') vorstehen und in eine Profilierung (13) des Abdeckteils (4') federnd einrasten, und daß den Seitenschenkel des Hohlprofilteils (2) zugewandte Endabschnitte (14) des Federelements (10) flächig unter Bildung einer Kraft- und Reibschlußverbindung an Profilabschnitten (15) des Hohlprofilteils (2), welche sich von den innenliegenden Enden der zur Wandfläche parallelen Abschnitte in den Innenraum (3) erstrecken, anliegen, so daß das Abdeckteil (4') hierdurch lösbar an der Installationsschiene (1) gehaltert ist.

9. Tragteil nach Anspruch 8, **dadurch gekennzeichnet, daß** das Federelement (10) symmetrisch zur Längsachse der Installationsschiene (1) ausgebildet ist.

10. Tragteil nach Anspruch 8 oder 9, **dadurch gekennzeichnet, daß** das Federelement (10) einen mittleren Abschnitt (11) mit einer im wesentlichen U-Profilform hat, welche im Einbauzustand zur Anlage an dem Abdeckteil (4') kommt und beidseitig des mittleren Abschnitts (11) je einen der Endabschnitte (14) hat, welcher C-förmig auskragend ausgebildet ist, und im Einbauzustand selbsthemmend mit der Installationsschiene (1) zusammenarbeitet.

11. Tragteil nach Anspruch 10, **dadurch gekennzeichnet, daß** an dem Übergangsbereich des Federelements (10) von dem mittleren Abschnitt (11) zu dem jeweiligen auskragenden Endabschnitt (14) wenigstens jeweils eine Materialaussparung (17) zur Einstellung der Federwirkung und/oder an dem Biegebereich des jeweiligen C-förmigen, auskragenden Endabschnitts (14) wenigstens jeweils eine weitere Materialaussparung (18) zur Einstellung der Anpreßkraft der mit der Installationsschiene (1) kraftschlüssig zusammenarbeitenden Enden (14) des Federelements (10) vorgesehen sind.

12. Tragteil nach einem der Ansprüche 8 bis 11, **dadurch gekennzeichnet, daß** das Federelement (10) materialeinheitlich ausgebildet ist.

## Claims

1. Installation channel (1), especially for ceiling electrical installations, having a hollow-section shell (2) enclosing an internal area (3) which is the receiving area for electrical installations, such as lamps or similar, which has parallel sections in one wall surface, and in which the receiving area (3) formed by the hollow-section shell (2) is closed off by means of a detachable fitted cover, **characterised by the fact that** the side web of the hollow-section shell (2) has a Σ-shaped cross-section enabling the hollow-section shell (2) to be inserted flush with the wall surface (7) as a permanent part of the structure; that the cover (4) is held in position by means of at least one support bracket (6) which is at least partly located in the internal area (3) of the hollow-section shell (2) in such a way, that the cover (4) rests on the sections (5) of the hollow-section shell (2) which are parallel with the wall surface (7); and that the support bracket (6) grips the rear surface of the sections (5) of the hollow-section shell (2) which run parallel to the wall surface (7).

2. Installation channel (1), especially for ceiling electrical installations, having a hollow-section shell enclosing an internal area (3) which is the receiving area for electrical installations, such as lamps or similar, which has parallel sections in one wall surface, and in which the acceptance area (3) formed by the hollow-section shell (2) is closed off by means of a detachable fitted cover, **characterised by** the fact that the side web of the hollow-section shell (2) has a Σ-shaped cross-section enabling the hollow-section shell (2) to be inserted flush with the wall surface (7) as a permanent part of the structure; that the cover (4') is held in position by means of at least one support bracket (6') which is at least partly located in the internal area (3) of the hollow-section shell (2), in such a way that, when the channel has been built into the wall], the support bracket (6') becomes a self-retaining spring device (10) holding the cover (4') of the installation channel (1) in position; that the spring device (10) comprises spring arms (12) which protrude in alignment with the cover (4') and snap into profiles (13) on the underside of the cover (4'); and that the flat end sections (14) of the spring device (10), which project in the direction of the side web of the hollow-section shell (2), bear against the profile sections (15) of the hollow-section shell (2) running from the inside ends of sections parallel with the wall surface in the interior area (3) forming a force-closed and frictional connection, so that the cover (4) is fastened firmly to the installation channel (1), but can be detached if required.

3. Installation channel in accordance with Claim 1 and Claim 2, **characterised by** the fact that the hollow-section shell (2) has an overall height of some 25 mm.

4. Installation channel in accordance with Claim 2, **characterised by** the fact that the spring device (10) has been designed to be symmetrical with the longitudinal axis of the installation channel.

5. Installation channel in accordance with Claims 2 to 4 **characterised by** the fact that the spring device (10) has a centre section (11) with what is essentially a U profile which comes into contact with the cover (4') when the cover and the channel are assembled, and has two end sections (14) one on each side of the centre section (11), each with a C-shaped overhang, working in conjunction with the installation channel (1) to become self-retaining when the cover and channel are assembled.

6. Installation channel in accordance with Claim 5 **characterised by the fact that** at the transition area from the centre section to each overhanging section (14) of the spring device (10) at least one hole in the material (17) is provided for the adjustment of the resilience of the spring and/or at least one further hole in the material (18) is provided at the flexing area of each C-shaped overhanging end section (14) for adjusting the contact force of the ends (14) of the spring device (10) working together with the installation channel (1) to force-close the cover onto the channel.

7. Installation channel as in one of the Claims 2-6 **characterised by the fact that** the spring device (10) is made from homogeneous material.

8. Support bracket for a cover (4') of an installation channel (1) in accordance with Claim 2 **characterised by the fact that** it has been designed in the form of a self- retaining spring device (10) which carries [the weight of] the cover (4') of the installation channel (1) when the cover and channel are assembled, and that the spring device (10) includes spring arms (12) which project in the direction of the cover (4') and snap into a profile (13) of the cover (4'), and that the end sections (14) of the spring device (10) which are turned towards the side web of the hollow-section shell (2) bear against the profile sections (15) of the hollow-section shell (2) running from the inside ends of sections parallel with the wall surface in the interior area (3) forming a force-closed and frictional connection, so that the cover (4) is fastened firmly to the installation channel (1), but can be detached if required.

9. Support bracket in accordance with Claim 8 **characterised by** the fact that the spring device (10) has been designed to be symmetrical with the longitudinal axis of the installation channel.

10. Support bracket in accordance with Claim 8 and Claim 9 **characterised by** the fact that the spring device (10) has a centre section (11) with what is essentially a U profile which comes into contact with the cover (4') when the cover and the channel are assembled, and has two end sections (14) one on each side of the centre section (11), each with a C-shaped overhang, working in conjunction with the installation channel (1) to become self-retaining when the cover and channel are assembled.

11. Support bracket in accordance with Claim 10 **characterised by the fact that,** at the transition area from the centre section to each overhanging section (14) of the spring device (10), at least one hole in the material (17) is provided for the adjustment of the resilience of the spring and/or at least one further hole in the material (18) is provided at the flexing area of each C-shaped overhanging end section (14) for adjusting the contact force of the ends (14) of the spring device (10) working in conjunction with the installation channel (1) to force-close the cover onto the channel.

12. Support bracket in accordance with one of the Claims from 8 to 11 **characterised by the fact that** the spring device (10) is made from homogeneous material.

## Revendications

1. Rail d'installation (1) destiné en particulier à des installations électriques au niveau du plafond et qui présente un élément creux profilé (2) enfermant un espace intérieur (3) servant d'espace de réception à des installations électriques, telles que des luminaires ou similaires, et présentant des sections parallèles à une surface murale, l'espace de réception (3) formé par l'élément creux profilé (2) étant fermé au moyen d'un élément de recouvrement (4) disposé de manière amovible, **caractérisé en ce que** la branche latérale de l'élément creux profilé (2) présente en section transversale une forme profilée en Σ, que l'élément creux profilé (2) peut être inséré, pour la pose sous enduit, comme élément demeurant dans l'ouvrage, dans la surface murale (7), de manière que les surfaces soient à fleur, que l'élément de recouvrement (4) soit maintenu par au moins un élément support (6) disposé au moins partiellement dans l'espace intérieur (3) de l'élément creux profilé (2), de manière que l'élément de recouvrement (4) repose sur les sections (5) parallèles à la surface murale (7) de l'élément creux profilé (2), et **en ce que** l'élément support (6) s'étend de manière à prendre par l'arrière les sections (5) s'étendant parallèlement à la surface murale (7) de l'élément creux profilé (2).

2. Rail d'installation (1) destiné en particulier à des installations électriques au niveau du plafond et qui présente un élément creux profilé (2) enfermant un espace intérieur (3) servant d'espace de réception à des installations électriques, telles que des luminaires ou similaires, et présentant des sections parallèles à une surface murale, l'espace de réception (3) formé par l'élément creux profilé (2) étant fermé au moyen d'un élément de recouvrement (4') disposé de manière amovible, **caractérisé en ce que** la branche latérale de l'élément creux profilé (2) présente en section transversale une forme profilée en Σ, que l'élément creux profilé (2) peut être inséré, pour la pose sous enduit, comme élément demeurant dans l'ouvrage, dans la surface murale (7), que l'élément de recouvrement (4') est maintenu par au moins un élément support (6') disposé au moins partiellement dans l'espace intérieur (3) de l'élément creux profilé (2), de manière que l'élément support (6') est conçu en forme d'élément ressort (10) qui, à l'état posé, porte par autoblocage l'élément de recouvrement (4') du rail d'installation (1), que l'élément ressort (10) comprend des bras ressort (12) qui font saillie en direction de l'élément de recouvrement (4') et s'enclenchent de manière élastique dans un profilage (13) de l'élément de recouvrement (4') et **en ce que** des sections terminales (14) de l'élément ressort (10) tournées vers les branches latérales de l'élément creux profilé (2) adhèrent, de manière plane, en formant un assemblage par adhérence et friction, sur des sections profilées (15) de l'élément creux profilé (2) qui s'étendent des extrémités situées à l'intérieur des sections parallèles à la surface murale jusque dans l'espace intérieur (3), de sorte que l'élément de recouvrement (4') soit maintenu de manière amovible sur le rail d'installation (1).

3. Rail d'installation selon les revendications 1 ou 2, **caractérisé en ce que** l'élément creux profilé (2) présente une hauteur de construction pouvant atteindre 25 mm.

4. Rail d'installation selon la revendication 2, **caractérisé en ce que** l'élément ressort (10) est conçu symétrique par rapport à l'axe longitudinal du rail d'installation (1).

5. Rail d'installation selon l'une des revendications 2 à 4, **caractérisé en ce que** l'élément ressort (10) possède une section médiane (11) de forme profilée essentiellement en U qui adhère, à l'état posé, sur l'élément de recouvrement (4'), qui présente de part et d'autre de la section médiane (11) respectivement une des sections terminales (14) conçue en forme de C en porte-à-faux et qui concourt avec le rail d'installation (1) par autoblocage à l'état posé.

6. Rail d'installation selon la revendication 5, **caractérisé en ce qu'**au moins une économie de matière (17) est respectivement prévue pour la réalisation de l'effet ressort dans la zone de transition de l'élément ressort (10), depuis la section médiane (11) à la section terminale respectivement en porte à faux (14), et/ou au moins une autre économie de matière (18) est respectivement prévue dans la zone de pliage de la section terminale (14) respective en forme de C en porte-à-faux pour la réalisation de la force de pression des extrémités (14) de l'élément ressort (10) concourant par adhérence avec le rail d'installation (1).

7. Rail d'installation selon l'une des revendications 2 à 6, **caractérisé en ce que** l'élément ressort (10) est en une matière homogène.

8. Elément support pour un élément de recouvrement (4') d'un rail d'installation (1) selon la revendication 2, **caractérisé en ce que** cet élément support est conçu en forme d'un élément ressort (10) qui, à l'état posé, porte par autoblocage l'élément de recouvrement (4') du rail d'installation (1), que l'élément ressort (10) comprend des bras ressort (12) qui font saillie en direction de l'élément de recouvrement (4') et s'enclenchent de manière élastique dans un profilage (13) de l'élément de recouvrement (4') et **en ce que** des sections terminales (14) de l'élément ressort (10), tournées vers les branches latérales de l'élément creux profilé (2), adhèrent, de manière plane en formant un assemblage par adhérence et friction, sur des sections profilées (15) de l'élément creux profilé (2) qui s'étendent des extrémités situées à l'intérieur des sections parallèles à la surface murale jusque dans l'espace intérieur (3) de manière que l'élément de recouvrement (4') soit maintenu de manière amovible sur le rail d'installation (1).

9. Elément support selon la revendication 8, **caractérisé en ce que** l'élément ressort (10) est conçu symétrique par rapport à l'axe longitudinal du rail d'installation (1).

10. Elément support selon les revendications 8 ou 9, **caractérisé en ce que** l'élément ressort (10) possède une section médiane (11) d'une forme profilée essentiellement en U qui adhère, à l'état posé, sur l'élément de recouvrement (4'), qui présente de part et d'autre de la section médiane (11) respectivement une des sections terminales (14) conçues en forme de C en porte-à-faux et qui à l'état posé, concourt avec le rail d'installation (1) par autoblocage.

11. Elément support selon la revendication 10, **caractérisé en ce qu'**au moins une économie de matière (17) est respectivement prévue pour la réalisation de l'effet ressort dans la zone de transition de l'élément ressort (10), depuis la section médiane (11) à la section terminale respectivement en porte à faux (14), et/ou au moins une autre économie de matière (18) est respectivement prévue dans la zone de pliage de la section terminale (14) respective en forme de C en porte-à-faux pour la réalisation de la force de pression des extrémités (14) de l'élément ressort (10) concourant par adhérence avec le rail d'installation (1).

12. Elément support selon l'une des revendications 8 à 11, **caractérisé en ce que** l'élément ressort (10) est en une matière homogène.
